# EUROPEAN PATENT APPLICATION

(11) **EP 4 660 337 A1**
(43) Date of publication of application: **10.12.2025**
(21) Application number: 24766974.0
(22) Date of filing: 27.02.2024
(51) Int. Cl.: C22C 14/00, C22C 30/00, C22F 1/00, C22F 1/18

(54) **TIAL-BASED ALLOY AND METHOD FOR PRODUCING SAME**

(30) Priority: 07.03.2023 JP 2023034586
(71) Applicant: Mitsubishi Heavy Industries Aero Engines, Ltd., Komaki-shi, Aichi 485-0826, (JP); INSTITUTE OF SCIENCE TOKYO, Tokyo 152-8550 (JP); Osaka Yakin Kogyo Co., Ltd., Osaka city Osaka 533-0005 (JP)
(72) Inventor: SOBU, Shintaro, Tokyo 100-8332 (JP); SHINDO, Kentaro, Tokyo 100-8332 (JP); FUKUSHIMA, Akira, Komaki-shi, Aichi 485-0826 (JP); TAKEYAMA, Masao, Tokyo 152-8550 (JP); NAKASHIMA, Hirotoyo, Tokyo 152-8550 (JP); YAMAGATA, Ryosuke, Tokyo 152-8550 (JP); HANAMI, Kazuki, Osaka-shi, Osaka 533-0005 (JP); DOI, Kenji, Osaka-shi, Osaka 533-0005 (JP); IWASA, Yasuhiro, Osaka-shi, Osaka 533-0005 (JP)
(74) Representative: Studio Torta S.p.A.
(86) International application number: PCT/JP2024/007176
(87) International publication number: WO 2024/185603

(57) **Abstract**

The present disclosure provides a TiAl-based alloy that combines desirable strength, ductility, and fracture toughness and method for producing the same. The TiAl-based alloy according to the present disclosure comprises, in atomic%, Al: 41% to 46 %, β-stabilizing elements: 3% to 11%, Ni: ≤ 1.0%, C: ≤ 0.6%, Si: ≤ 0.5%, O: ≤ 1.5%, the balance being Ti and inevitable impurities, in which the β-stabilizing elements are any of Cr, Nb, V, Mn and Mo or a combination thereof, a metal structure comprises (α₂/γ) lamellar grains and a cellular structure precipitated at (α₂/γ) lamellar grain boundaries, a volume fraction of the cellular structure is 10 vol% or more and 70 vol% or less, and the cellular structure is a (β/γ) cellular structure or an (α₂/γ/β) cellular structure.

## Description

### [Technical Field]

The present disclosure relates to a TiAl-based alloy and a method for producing the same.

### [Background Art]

A TiAl-based alloy is an alloy (intermetallic compound) in which Ti (titanium) and Al (aluminum) are bonded together to form the alloy (see Patent Literature 1). The TiAl-based alloy, which is lightweight and exhibits high strength at elevated temperatures, is applied to structural materials for high-temperature use, such as in engines and aerospace equipment.

### [Citation List]

### [Patent Literature]

[PTL 1] European Patent Application Publication No. 2851445

### [Non Patent Literature]

[NPL 1] Y-W.Kim: Materials Science and Engineering A192/193(1995) 519-533

### [Summary of Invention]

### [Technical Problem]

It is widely known that refinement of the prior-α grain diameter or precipitation of a γ phase and/or a β phase at prior-α grain boundaries achieve high strength and high ductility in TiAl-based alloys. However, refinement of crystal grain diameter or grain boundary precipitate phases reduces fracture toughness. For example, in a Duplex-type TiAl-based alloy in which a grain boundary γ phase is precipitated, high strength and high ductility are exhibited, but it is difficult to obtain high fracture toughness (see Non-Patent Literature 1).

Fracture toughness is a practically important property of TiAl-based alloys. However, no method has been known for producing a TiAl-based alloy in which strength, ductility, and fracture toughness are simultaneously improved. It is difficult to obtain a TiAl-based alloy that combines desirable strength, ductility, and fracture toughness. Thus, it is currently necessary to use a TiAl-based alloy in which one of the above properties is sacrificed.

The present disclosure has been made in view of such circumstances, and an object thereof is to provide a TiAl-based alloy combining desirable strength, ductility, and fracture toughness, and a method for producing the same.

### [Solution to Problem]

To solve the above-described problem, the TiAl-based alloy and the method for producing the same according to the present disclosure employ the following means.

The present disclosure provides a TiAl-based alloy comprising, in atomic%, Al: 41% to 46 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof, wherein the TiAl-based alloy has a metal structure comprising (α₂/γ) lamellar grains and a cellular structure precipitated at (α₂/γ) lamellar grain boundaries, and wherein a volume fraction of the cellular structure is 10 vol% or more and 70 vol% or less, and the cellular structure is a (β/γ) cellular structure or an (α₂/γ/β) cellular structure.

The present disclosure provides a method for producing a TiAl-based alloy, wherein the TiAl-based alloy is held for a predetermined period of time at a first temperature in an (α+γ) two-phase region, an α single-phase region, a (β+α) two-phase region, or a (β+α+γ) three-phase region, then the TiAl-based alloy is quenched at a cooling rate equal to or higher than air cooling, and the quenched TiAl-based alloy is held for a predetermined period of time at a second temperature in a (β+γ) two-phase region or a (β+α₂+γ) three-phase region to form a metal structure comprising (α₂/γ) lamellar grains and a cellular structure precipitated at (α₂/γ) lamellar grain boundaries, and wherein the second temperature and a holding time at the second temperature are controlled so that the cellular structure is a (β/γ) cellular structure or an (α₂/γ/β) cellular structure and the volume fraction of the cellular structure is 10 vol% or more and 70 vol% or less, the TiAl-based alloy containing, in atomic%, Al: 41% to 46 %, β-stabilizing elements: 3% to 11%, Ni: ≤ 1.0%, C: ≤ 0.6%, Si: ≤ 0.5%, O: ≤ 1.5%, the balance being Ti and inevitable impurities, and the β-stabilizing elements being any of Cr, Nb, V, Mn and Mo or a combination thereof.

### [Advantageous Effects of Invention]

According to the present disclosure, TiAl-based alloy combining desirable strength, ductility, and fracture toughness is obtained.

### [Brief Description of Drawings]

[Fig. 1] Fig. 1 is a phase diagram of a TiAl-based alloy (Al: 45 atomic%) with the addition of Cr.
[Fig. 2] Fig. 2 shows a structural micrograph of Ti-45Al-6Cr [atomic%].
[Fig. 3] Fig. 3 shows the relationship between the second heat treatment time and the volume fraction of the cellular structure.
[Fig. 4] Fig. 4 shows the relationship between the volume fraction of the cellular structure and tensile strength/elongation at break (at room temperature).
[Fig. 5] Fig. 5 shows the relationship between the volume fraction of the cellular structure and tensile strength/yield strength/elongation at break (at 750°C).
[Fig. 6] Fig. 6 shows the relationship between the precipitation of the cellular structure and tensile strength/fracture toughness (at room temperature).

### [Description of Embodiments]

The TiAl-based alloy and a method for producing the same according to the present embodiment can be applied to components such as the low-pressure turbine (LPT) moving blade and high-pressure compressor (HPC) moving blade of an aircraft engine, or the turbine wheel of a turbocharger.

### <TiAl-based alloy>

The TiAl-based alloy may be a component produced by casting method, forging method, powder metallurgy method or the like. The powder metallurgy method may be an additive manufacturing (AM), a metal powder injection molding (MIM), or a spark plasma sintering method (SPS). TiAl-based alloys produced by MIM contain more oxygen (O) compared to those produced by other methods.

The TiAl-based alloy is an alloy composed of an intermetallic compound of Ti and Al. The TiAl-based alloy primarily contains Ti and Al as its primary components. "Primary components" refer to the components that are present in large amounts.

A TiAl-based alloy comprises, in atomic%, Al: 41 to 46 %, β-stabilizing elements: 3 to 11%, Ni: ≤ 1.0%, C: ≤ 0.6%, Si: ≤ 0.5%, O: ≤ 1.5%, the balance being Ti and inevitable impurities.

The content of Al is 41 atomic% or more and 46 atomic% or less, and preferably 42 atomic% or more and 45 atomic% or less. When the content of Al is lower than 41 atomic%, the relative content of Ti increases, which results in a decrease in specific strength. Further, it becomes difficult to form a cellular structure mainly composed of a γ phase, which is effective in improving ductility at high temperatures. When the content of Al is higher than 46 atomic%, it becomes difficult to form a cellular structure including β-phase, which is effective in improving strength at high temperatures.

The β-stabilizing elements are any of Cr, Nb, V, Mn, and Mo or a combination thereof. The content of the β-stabilizing elements is 3 atomic% or more and 11 atomic% or less, and preferably 4 atomic% or more and 10 atomic% or less. When the content of the β-stabilizing elements is lower than 3 atomic%, it becomes difficult to form a cellular structure including a β phase, which is effective in improving strength at high temperatures. When the content of the β-stabilizing elements is higher than 11 atomic%, it becomes difficult to form a cellular structure mainly composed of a γ phase, which is effective in improving ductility at high temperatures.

The reason why the content range of Al is narrower than that of the β-stabilizing elements is that variations in the Al content have a greater influence on the phase transformation in the TiAl-based alloy.

The content of Ni is 1.0 atomic% or less. In the case where a powder metallurgy method is employed, particularly when the method includes a sintering process such as MIM or SPS, Ni can be used as a sintering aid to promote sintering, thereby improving the sintered density of the TiAl-based alloy sintered body. Although Ni also functions as a β-stabilizing element, the Ni content within the above range does not influence the phase transformation in the TiAl-based alloy as significantly as the Al content does.

The content of O is 1.5 atomic% or less. O contained in the TiAl- based alloy is mainly derived from the raw materials of the TiAl-based alloy and the production conditions thereof. When the O content is excessively high, the ductility decreases.

The content of C is 0.6 atomic% or less. C can improve the creep properties of the TiAl-based alloy. The C content within the above range does not influence the phase transformation in the TiAl-based alloy as significantly as the Al content does.

The content of Si is 0.5 atomic% or less. Si can improve the creep properties of the TiAl-based alloy. The Si content within the above range does not influence the phase transformation in the TiAl-based alloy as significantly as the Al content does.

Inevitable impurities are H, N, Fe, and the like.

In the production method of the TiAl-based alloy according to the present embodiment, the crystal grain diameter can be controlled by selecting an appropriate first temperature in the heat treatment, and thus the inclusion of B, which is effective for crystal grain refinement, is not essential.

The composition of the above TiAl-based alloy converted into weight is as follows.

The content of Al is 24.7 wt% or more and 33.1 wt% or less.

The content of the β-stabilizing elements is 3.8 wt% or more and 24.7 wt% or less. In the case where the β-stabilizing element is Cr alone, the Cr content is 3.9 wt% or more and 15.1 wt% or less. In the case where the β-stabilizing element is Nb alone, the Nb content is 6.8 wt% or more and 24.1 wt% or less. In the case where the β-stabilizing element is V alone, the V content is 3.8 wt% or more and 14.9 wt% or less. In the case where the β-stabilizing element is Mn alone, the Mn content is 4.1 wt% or more and 15.8 wt% or less. In the case where the β-stabilizing element is Mo alone, the Mo content is 7.0 wt% or more and 24.7 wt% or less.

The content of Ni is 1.56 wt% or less. The content of C is 0.19 wt% or less. The content of Si is 0.37 wt% or less. The content of O is 0.64 wt% or less.

The metal structure of the TiAl-based alloy includes a lamellar structure and a cellular structure. The volume fraction of the cellular structure in the metal structure of the TiAl-based alloy is 10 vol% or more and 70 vol% or less.

The constitution of the metal structure is not limited to the above, and may further include other constituent phases such as prior-β grain and/or massive γ phase, in addition to the lamellar structure and the cellular structure, and it is preferable that the volume fraction of the other constituent phases is 30 vol% or less.

The volume fractions of the cellular structure and the other constituent phases are controlled such that the volume fraction of the lamellar structure does not become 0%. The metal structure of the TiAl-based alloy includes at least several vol% of a lamellar structure. The metal structure of the TiAl-based alloy may be composed of, for example, 70 vol% of a cellular structure, 30 vol% of a lamellar structure, and 0 vol% of other constituent phases. The metal structure of the TiAl-based alloy may be composed of, for example, 30 vol% of a cellular structure, 40 vol% of a lamellar structure, and 30 vol% of other constituent phases.

The lamellar structure is an (α₂/γ) lamellar grain in which α₂ phase and γ phase are regularly laminated in layers.

The cellular structure is a (β/γ) cellular structure and/or an (α₂/γ/β) cellular structure.

The cellular structure is an aggregate of fine mixed structures (cells) of β phase and γ phase, or α₂ phase, β phase, and γ phase, generated by discontinuous precipitation reaction. The cell diameter of one cell is from 1 µm to 25 µm, which is a very fine structure, and has a feature in which a plurality of cells are present in a state of being continuously aggregated. In some cases, the β phase is present in a form in which the β phase is scattered at the cell boundary.

The prior-β grains, which are distinguished as other constituent phases, are mainly composed of the β phase, and the massive γ phase is mainly composed of the γ phase. Meanwhile, a mixed structure of the β phase and the γ phase may be formed during the cooling process to room temperature, but such a mixed structure does not form a structural morphology in the form of a continuously aggregated structure composed of cells having a cell diameter ranging from 1 µm to 25 µm. This differs from the above cellular structure.

### <Production Method>

The production method of the above TiAl-based alloys will be described.

The method for producing a TiAl-based alloy according to the present embodiment comprises a step of heat treating a TiAl-based alloy produced by a casting method, a forging method, a powder metallurgy method or the like. The heat treatment is carried out in two stages.

### (First Heat Treatment)

In the first stage of the heat treatment, the TiAl-based alloy is heated to a first temperature and held at the first temperature for a predetermined period of time. The rate of temperature increase during the heating of the TiAl-based alloy may be selected optionally. After being held for the predetermined period of time, the TiAl-based alloy is quenched and cooled to at least a temperature equal to or lower than a second temperature which will be described later.

The first temperature is a temperature at which the TiAl-based alloy is held in an (α + γ) two-phase region, an α single-phase region, a (β + α) two-phase region, or a (β + α + γ) three-phase region. When the first temperature is set to the temperature of the (α + γ) two-phase region, the (β + α) two-phase region, or the (β + α + γ) three-phase region, it is preferable that the temperature is selected from among temperatures close to the α single-phase region within the (α + γ) two-phase region, the (β + α) two-phase region, or the (β + α + γ) three-phase region. The term "close" refers to a temperature range in which the α phase fraction, calculable by applying the lever rule from a phase equilibrium diagram or an isothermal section diagram, becomes 70% or more.

For example, the first temperature is 1150°C or more and 1450°C or less, and preferably 1200°C or more and 1400°C or less.

For example, the holding time at the first temperature is one minute or more and eight hours or less, and preferably 30 minutes or more and four hours or less.

The term "quench" means lowering the temperature at a cooling rate equal to or higher than air cooling. The specific cooling rate during quenching is an average cooling rate from the first temperature to 1000°C, and is 30°C/min or more and 800°C/min or less, and preferably 100°C/min or more and 400°C/min or less. The quenching can be performed, for example, by gas fan cooling using an inert gas (such as Ar or N₂). The cooling rate inside the material varies depending on the size of the material subjected to heat treatment, but it is possible to control the cooling rate appropriately by adjusting the gas flow rate.

### (Second Heat Treatment)

In the second stage of the heat treatment, the TiAl-based alloy having undergone the first heat treatment is heated to a second temperature, and then held at the second temperature for a predetermined period of time. The rate of temperature increase during the heating of the TiAl-based alloy may be selected optionally. After being held for the predetermined period of time, the TiAl-based alloy is cooled and lowered in temperature to room temperature. The cooling rate is optional.

The second temperature is a temperature at which the TiAl-based alloy is held in a (β + γ) two-phase region or a (β + α₂ + γ) three-phase region. When the second temperature is set to the temperature of the (β + α₂ + γ) three-phase region, it is preferable that the temperature is selected from among temperatures close to the (β + γ) region within the (β + α₂ + γ) three-phase region.

For example, the second temperature is 850°C or more and 1150°C or less, and preferably 900°C or more and 1100°C or less.

The second temperature is set to be at least 10°C lower than the first temperature. The second temperature is a temperature that exists in a temperature range corresponding to a phase state different from that at the first temperature.

The holding time at the second temperature is controlled so that the volume fraction of the cellular structure is 10 vol% or more and 70 vol% or less. A longer holding time at the second temperature allows the volume fraction of the cellular structure to be increased.

By controlling the volume fraction of the cellular structure is 10 vol% or more and 70 vol% or less, it is possible to obtain a TiAl-based alloy combining desirable strength, ductility, and fracture toughness. The holding time such that the volume fraction of the cellular structure is 10 vol% or more and 70 vol% or less can be obtained by preliminary tests, or the like.

For example, the holding time at the second temperature is one minute or more and 240 hours or less, and preferably 30 minutes or more and 48 hours or less.

The second heat treatment may be performed consecutively after the first heat treatment, but is not limited thereto, and may be performed separately from the first heat treatment with a time interval.

The transformation temperature ranges of the respective phases vary depending on the composition of the TiAl-based alloy. The first temperature and the second temperature are appropriately selected based on a phase diagram corresponding to the composition of the TiAl-based alloy to be subjected to the heat treatment.

Next, with reference to the drawings, the effects of the above-described heat treatment will be explained.

### (Phase Diagram)

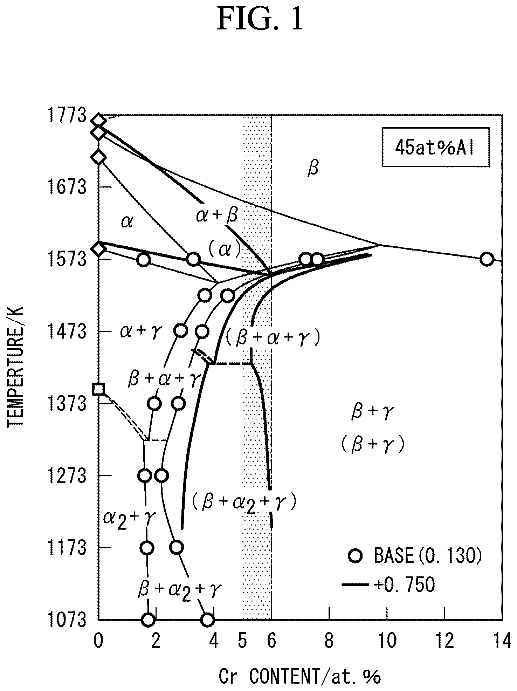

Fig. 1 shows a phase diagram of a TiAl-based alloy (Al: 45 atomic%) with the addition of Cr. In the figure, the horizontal axis represents the Cr content (atomic%), and the vertical axis represents the temperature (K), the fine lines (and open circles) indicate an oxygen content of 0.13 atomic% (0.130), and the bold lines indicate an oxygen content of 0.75 atomic% (+0.75O). In Fig. 1, the phases of the TiAl-based alloy having +0.75O are denoted in parentheses.

The TiAl-based alloy having the oxygen content of 0.13 atomic% (0.130) is assumed to be an alloy produced by AM method among casting method, forging method, and powder metallurgy method. The TiAl-based alloy having the oxygen content of 0.75 atomic% (+0.75O) is assumed to be an alloy produced by MIM method among powder metallurgy methods.

As shown in Fig. 1, with an increase in oxygen content, the transformation temperature ranges of the respective phases shift.

As shown in Fig. 1, as the Cr content increases, a phase constitution containing a β phase can be obtained even at lower temperatures. This is because the addition of Cr allows the β-phase to stabilize and exist. Similar tendencies are observed when a β-stabilizing element other than Cr is added.

By using a phase diagram such as that shown in Fig. 1, the first temperature and the second temperature suitable for the TiAl-based alloy to be subjected to the heat treatment can be determined. In Fig. 1, the first temperature and the second temperature can be selected from appropriate ranges of the phase diagram according to the oxygen content and the content of the β-stabilizing element.

For example, in a TiAl-based alloy (Ti-45Al-5 to 6Cr-0.75O [atomic%]) in which 5 atomic% to 6 atomic% of Cr and 0.75 atomic% of O are added, the first temperature may be selected from a range of 1523 K (about 1250°C) to 1623 K (about 1350°C). Within the above temperature range, when the oxygen content is 0.75 atomic%, the TiAl-based alloy can be held in any of the (α + γ) two-phase region, the α single-phase region, the (β + α) two-phase region, or the (β + α + γ) three-phase region. The second temperature can be selected from a range of 1423 K (about 1150°C) or lower. Thereby, the TiAl-based alloy can be held in the (β + γ) two-phase region or the (β + α₂ + y) three-phase region.

At the first temperature, the TiAl-based alloy is held in any of the (α + γ) two-phase region, the α single-phase region, the (β + α) two-phase region, or the (β + α + γ) three-phase region. When the first temperature is set to the temperature of the (α + γ) two-phase region, the (β + α) two-phase region, or the (β + α + γ) three-phase region, it is preferable that the temperature is selected from among temperatures close to the α single-phase region within the (α + γ) two-phase region, the (β + α) two-phase region, or the (β + α + γ) three-phase region. Therefore, at the first temperature, the α phase becomes the main constituent phase of the TiAl-based alloy. When cooled, the α phase transforms into a lamellar (α₂/γ) structure in which the α₂ phase and the γ phase are alternately stacked in layers, or alternatively, if the cooling rate during quenching is high, the α phase transforms into a feathery structure. However, by being held at the second temperature in the second heat treatment, the structure is ultimately transformed into a lamellar (α₂/γ) structure.

When the TiAl-based alloy is held at the first temperature for a predetermined period of time and then quenched, a supersaturated solid solution having high γ forming ability and β forming ability is formed in the TiAl-based alloy.

After the first heat treatment, by holding the TiAl-based alloy at the second temperature lower than the first temperature, a cellular structure is formed by a discontinuous precipitation reaction from prior-α grain boundaries ((α₂/γ) lamellar grain boundaries).

### (Structural Micrograph)

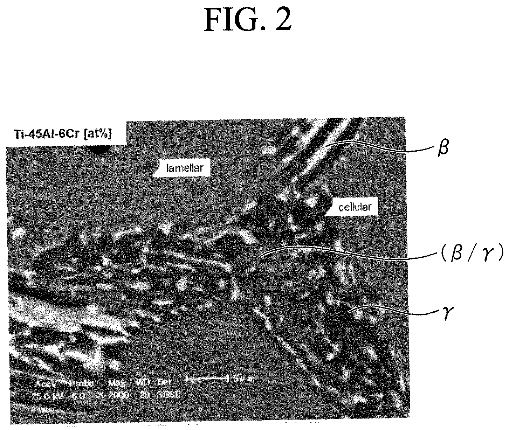

Fig. 2 shows a structural micrograph of Ti-45Al-6Cr [atomic%]. The Ti-45Al-6Cr [atomic%] is a TiAl-based alloy that has been subjected to the first heat treatment at 1250°C, quenched at a rate of 450°C/min, and then subjected to the second heat treatment at 1000°C. The oxygen content is 0.82 atomic%.

In the TiAl-based alloy shown in Fig. 2, it can be confirmed that a fine cellular structure (cellular) is precipitated in the regions (prior-a grain boundaries) between the lamellar structures (lamellar).

### (Second Heat Treatment Time and Volume Fraction of Cellular Structure)

For TiAl-based alloys (Alloys 1 to 3) having different Al contents, heat treatment was performed in accordance with the above embodiment, and the volume fraction of the cellular structure was investigated.
Alloy 1: Ti-42.3Al-4Nb-3Cr-0.76O [atomic%]
Alloy 2: Ti-43.0Al-4Nb-3Cr-0.83O [atomic%]
Alloy 3: Ti-43.8Al-4Nb-3Cr-0.71O [atomic%]

The first heat treatment was carried out at a first temperature of 1250°C for a holding time of two hours and at a cooling rate of 450°C/min. After cooling to room temperature, a second heat treatment was separately conducted. The second heat treatment was carried out at a second temperature of 1000°C for a holding time of either three hours or 16 hours, followed by fan cooling in an Ar gas atmosphere. The volume fraction of the cellular structure was determined by quantifying the area fraction occupied by the cellular structure in a multiple backscattered electron image (BEI) obtained using a scanning electron microscope (SEM), through image analysis, and then calculating the average area fraction from the plurality of BEI, which is equivalent to the volume fraction.

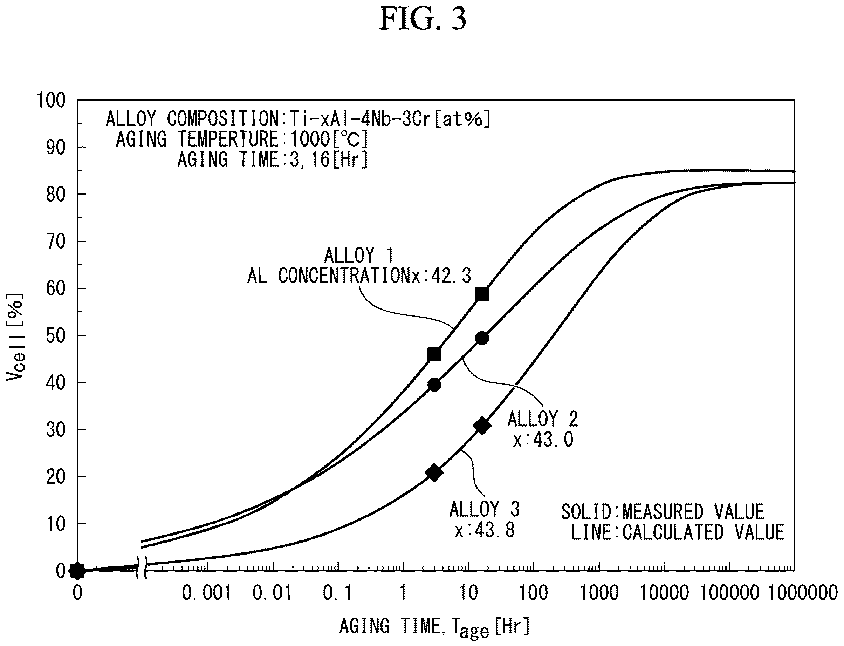

Fig. 3 shows the relationship between the second heat treatment time and the volume fraction of the cellular structure. In the same figure, the horizontal axis represents the holding time of the second heat treatment (Aging Time, T_{age} [Hr]), and the vertical axis represents the volume fraction of the cellular structure (V_{cell} [%]).

In Fig. 3, the symbols ▪, •, and ◆ respectively indicate the measured values of alloys 1, 2, and 3 (holding time of the second heat treatment: three hours and 16 hours). The solid lines (Line) in Fig. 3 represent calculated values obtained using the Johnson-Mehl-Avrami equation based on the measured values of alloys 1, 2, and 3, respectively.

According to Fig. 3, the volume fraction of the cellular structure varied depending on the Al content. The lower the Al content, the higher the volume fraction of the cellular structure.

According to Fig. 3, as the holding time at the second temperature increases, the precipitation reaction of the cellular structure proceeds further, resulting in an increase in the volume fraction of the cellular structure.

From the above results, it is suggested that the volume fraction of the cellular structure can be controlled by the composition of the TiAl-based alloy and the holding time at the second temperature (the second heat treatment time). Moreover, the growth rate of the cellular structure depends on the diffusion coefficient, and the diffusion coefficient in turn depends on the temperature. It is thus obvious that a higher second temperature proceeds the precipitation reaction of the cellular structure, and it is also obvious that the volume fraction of the cellular structure can be controlled by the second temperature during the second heat treatment.

### (Influence of Cellular Structure Precipitation on Mechanical Properties of TiAl-Based Alloys)

Tensile tests and Chevron notch three-point bending tests were carried out on alloys 1 to 3 after heat treatment, and tensile strength, elongation at break, 0.2% yield strength (hereinafter referred to as "yield strength"), and fracture toughness were measured. The tests were carried out at room temperature or under heating at 750°C. The strain rate in the tensile test was set to 8.3 × 10⁻⁵ [s⁻¹] at room temperature and 8.3 × 10⁻⁴ [s⁻¹] under heating at 750°C, and the test speed in the three-point bending test was set to 8.3 × 10⁻⁵ [mm·s⁻¹].

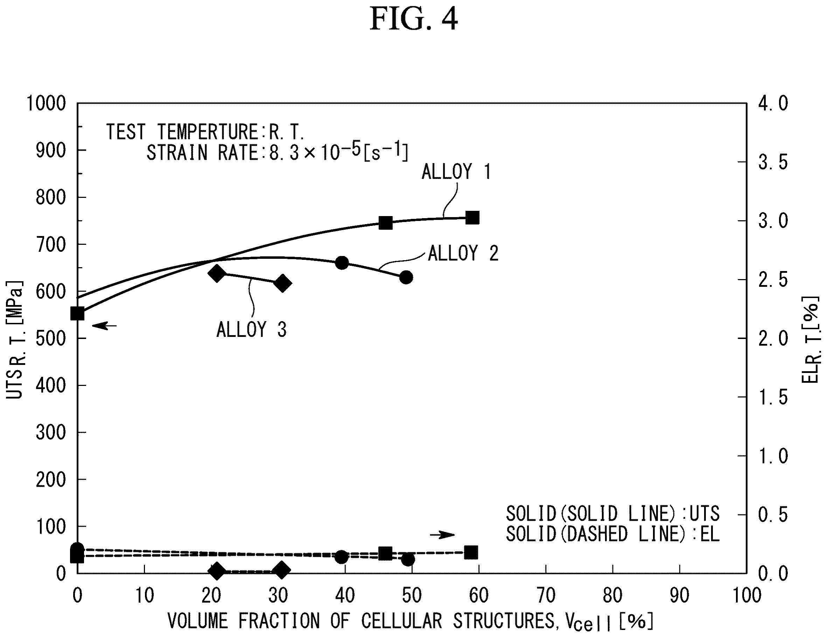

Fig. 4 shows the relationship between the volume fraction of the cellular structure and tensile strength/elongation at break (at room temperature). In the figure, the horizontal axis represents the volume fraction of the cellular structure (V_{cell} [%]); the left vertical axis represents the tensile strength at room temperature (UTS_{R.T.} [MPa]); and the right vertical axis represents the elongation at break at room temperature (EL_{R.T}. [MPa]), and SOLID (solid line) represents the tensile strength, and SOLID (dashed line) represents the elongation at break. The symbols ▪, •, and ◆ indicate the measured values for alloys 1, 2, and 3, respectively.

According to Fig. 4, the formation of the cellular structure resulted in an increase in tensile strength. On the other hand, the formation of the cellular structure had no influence on elongation at break.

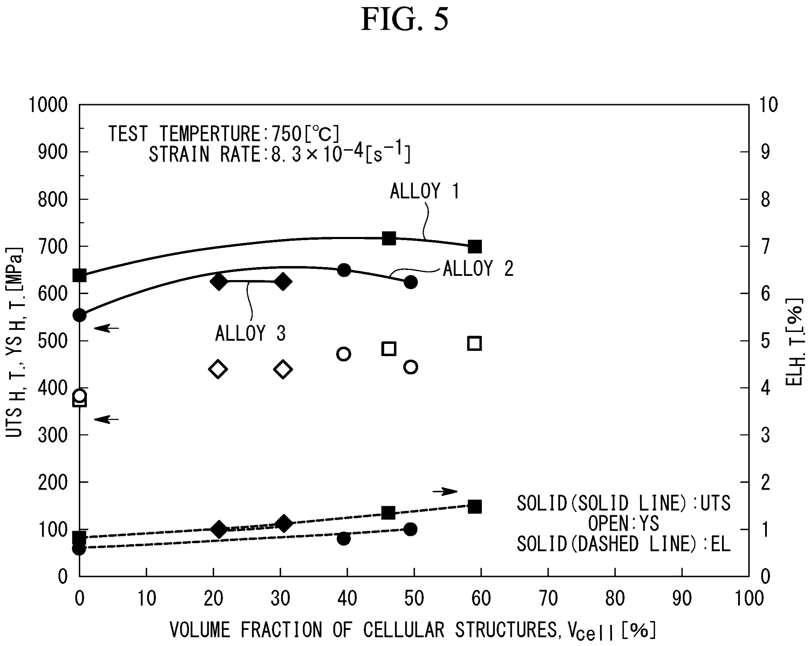

Fig. 5 shows the relationship between the volume fraction of the cellular structure and tensile strength/ yield strength/elongation at break (750°C). In the figure, the horizontal axis represents the volume fraction of the cellular structure (V_{cell} [%]); the left vertical axis represents the tensile strength (UTS_{H.T.} [MPa]) and yield strength (YS_{H.T.} [MPa]) at 750°C; and the right vertical axis represents the elongation at break (EL_{H.T.} [MPa]) at 750°C, and the solid line indicates tensile strength, the dashed line indicates elongation at break, and the line-less symbols (□, ∘,◊) indicate yield strength. The symbols ▪, •, and ◆ (□, ∘, ◊) represent the measured values for alloys 1, 2, and 3, respectively.

According to Fig. 5, as in the room-temperature tests, the formation of the cellular structure resulted in an increase in (high-temperature) tensile strength. In addition, at the elevated temperature of 750°C, the formation of the cellular structure led to improvements in both yield strength and elongation at break.

According to Fig. 5, when the volume fraction of the cellular structure is 10% or more, a clear improvement effect in yield strength and elongation at break at the elevated temperature of 750°C is observed. When the volume fraction of the cellular structure is 70% or less, it is possible to achieve the maximum value of tensile strength at 750°C.

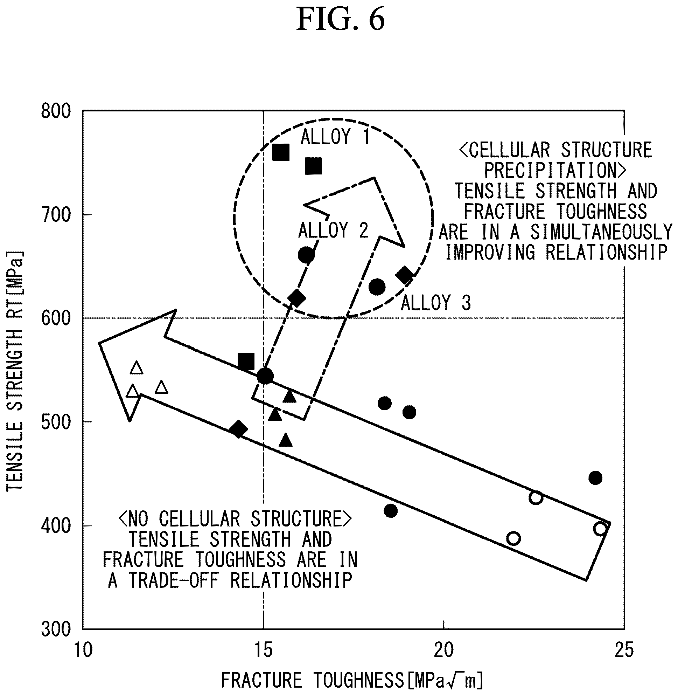

Fig. 6 shows the relationship between the precipitation of the cellular structure and tensile strength/fracture toughness (at room temperature). In the figure, the horizontal axis represents the fracture toughness at room temperature [MPa√m], and the vertical axis represents the tensile strength at room temperature [MPa]. Fig. 6 also includes the results for alloys 1 to 3 and various TiAl-based alloys produced by conventional methods (strengthening through refinement of crystal grain diameter or grain boundary precipitate phase).

According to Fig. 6, it was confirmed that, in TiAl-based alloys in which the cellular structure is not precipitated, tensile strength and fracture toughness are in a trade-off relationship (see arrow from lower right to upper left). When the tensile strength is high, the fracture toughness tends to be low. On the other hand, in the TiAl-based alloys (alloys 1 to 3) in which a cellular structure has been precipitated, it was confirmed that both the tensile strength and the fracture toughness are simultaneously improved (see arrow from lower left to upper right in the center of the figure).

### <Appendix>

The TiAl-based alloy and the method for producing the same according to the above-described embodiment can be understood, for example, as described below.

The TiAl-based alloy according to the first aspect of the present disclosure comprises, in atomic%, Al: 41% to 46 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof, wherein the TiAl-based alloy has a metal structure comprising (α₂/γ) lamellar grains and a cellular structure precipitated at (α₂/γ) lamellar grain boundaries, and wherein a volume fraction of the cellular structure is 10 vol% or more and 70 vol% or less, and the cellular structure is a (β/γ) cellular structure or an (α₂/γ/β) cellular structure.

In the above first aspect, the metal structure comprises 30 vol% or less of other constituent phases, and the other constituent phases may comprise prior-β grains and/or massive γ phases.

The method for producing the TiAl-based alloy according to the second aspect of the present disclosure, wherein the TiAl-based alloy is held at a first temperature for a predetermined period of time in an (α+γ) two-phase region, an α single-phase region, a (β+α) two-phase region, or a (β+α+γ) three-phase region, then the TiAl-based alloy is quenched at a cooling rate equal to or higher than air cooling and the quenched TiAl-based alloy is held at a second temperature for a predetermined period of time in a (β+γ) two-phase region or a (β+α₂+γ) three-phase region to form a metal structure comprising (α₂/γ) lamellar grains and a cellular structure precipitated at (α₂/γ) lamellar grain boundaries, and wherein the second temperature and the holding time at the second temperature are held so that the cellular structure is a (β/γ) cellular structure or an (α₂/γ/β) cellular structure and the volume fraction of the cellular structure is 10 vol% or more and 70 vol% or less, the TiAl-based alloy containing, in atomic%, Al: 41% to 46 %, β-stabilizing elements: 3% to 11%, Ni: ≤ 1.0%, C: ≤ 0.6%, Si: ≤ 0.5%, O: ≤ 1.5%, the balance being Ti and inevitable impurities, and the β-stabilizing elements being any of Cr, Nb, V, Mn and Mo or a combination thereof.

In the above second aspect, the metal structure comprises other constituent phases, the other constituent phases comprise prior-β grains and/or massive γ phases, and the first temperature, the holding time at the first temperature, and the cooling rate from the first temperature may be controlled such that a volume fraction of the other constituent phases becomes 30 vol% or less.

The cellular structure is a fine structure including a β phase, which serves as a strengthening phase. By the precipitation of such a cellular structure, the yield strength and tensile strength of the TiAl-based alloy are improved.

The cellular structure is a structure mainly composed of a γ phase, which serves as a high-temperature ductile phase. By the precipitation of such a cellular structure, the elongation at break of the TiAl-based alloy is improved.

The cellular structure is a structure that is precipitated by a discontinuous precipitation reaction from prior-α grain boundaries while maintaining the prior-α grain diameter ((α₂/γ) lamellar grain diameter). By maintaining the prior-α grain diameter, fracture toughness can be ensured, and the precipitation of the cellular structure improves the yield strength, tensile strength, and elongation at break of the TiAl-based alloy.

When the content of O, which is a minor component in the TiAl-based alloy, is high, ductility decreases. Therefore, in general, it is preferable to keep the content of O low; however, attempting to reduce the content of O leads to an increase in producing cost. In the second aspect of the present disclosure, the volume fraction of the cellular structure can be controlled by performing the heat treatment in two stages, and it is thus possible to obtain an alloy having the desired ductility as long as the content of O is within the above-described range.

According to the above-described aspect of the present disclosure, it is possible to obtain a TiAl-based alloy that combines desirable strength, ductility, and fracture toughness.

## Claims

1. A TiAl-based alloy comprising, in atomic%, Al: 41% to 46 %, β-stabilizing elements: 3% to 11%, Ni: ≤ 1.0%, C: ≤ 0.6%, Si: ≤ 0.5%, O: ≤ 1.5%, the balance being Ti and inevitable impurities, the β-stabilizing elements being any of Cr, Nb, V, Mn and Mo or a combination thereof,
wherein the TiAl-based alloy has a metal structure comprising (α₂/γ) lamellar grains and a cellular structure precipitated at (α₂/γ) lamellar grain boundaries, and
wherein a volume fraction of the cellular structure is 10 vol% or more and 70 vol% or less, and
the cellular structure is a (β/γ) cellular structure or an (α₂/γ/β) cellular structure.

2. The TiAl-based alloy according to claim 1, wherein the metal structure comprises 30 vol% or less of other constituent phases, the other constituent phases comprising prior-β grains and/or massive γ phases.

3. A method for producing a TiAl-based alloy, wherein the TiAl-based alloy is held for a predetermined period of time at a first temperature in an (α+γ) two-phase region, an α single-phase region, a (β+α) two-phase region, or a (β+α+γ) three-phase region, then the TiAl-based alloy is quenched at a cooling rate equal to or higher than air cooling and the quenched TiAl-based alloy is held for a predetermined period of time at a second temperature in a (β+γ) two-phase region or a (β+α₂+γ) three-phase region to form a metal structure comprising (α₂/γ) lamellar grains and a cellular structure precipitated at (α₂/γ) lamellar grain boundaries,
wherein the second temperature and a holding time at the second temperature are controlled so that the cellular structure is a (β/γ) cellular structure or an (α₂/γ/β) cellular structure and a volume fraction of the cellular structure is 10 vol% or more and 70 vol% or less, the TiAl-based alloy containing, in atomic%, Al: 41% to 46 %, β-stabilizing elements: 3% to 11%, Ni: ≤ 1.0%, C: ≤ 0.6%, Si: ≤ 0.5%, O: ≤ 1.5%, the balance being Ti and inevitable impurities, and the β-stabilizing elements being any of Cr, Nb, V, Mn and Mo or a combination thereof.

4. The method for producing a TiAl-based alloy according to claim 3,
wherein the metal structure comprises other constituent phases,
the other constituent phases comprise prior-β grains and/or massive γ phases, and
the first temperature, a holding time at the first temperature, and the cooling rate from the first temperature are controlled such that a volume fraction of the other constituent phases becomes 30 vol% or less.
